# EUROPÄISCHE PATENTSCHRIFT

(11) **EP 4 108 069 B1**
(45) Veröffentlichungstag und Bekanntmachung des Hinweises auf die Patenterteilung: **27.11.2024**
(21) Anmeldenummer: 22178744.3
(22) Anmeldetag: 13.06.2022
(51) Int. Cl.: A01F 15/08

(54) **RUNDBALLENPRESSE**
ROUND BALING PRESS
PRESSE À BALLES RONDES

(30) Priorität: 23.06.2021 DE 102021116199
(43) Veröffentlichungstag der Anmeldung: 28.12.2022
(73) Patentinhaber: Maschinenfabrik Bernard Krone GmbH & Co. KG, 48480 Spelle (DE)
(72) Erfinder: Schnieders, Felix, 49808 Lingen (DE)

(56) Entgegenhaltungen:
- DE-A1- 3 941 707
- US-A1- 2007 081 878
- US-A1- 2013 298 787

## Beschreibung

Die vorliegende Erfindung betrifft eine Rundballenpresse nach dem Oberbegriff von Anspruch 1 sowie ein Verfahren nach dem Oberbegriff von Anspruch 13.

Erntemaschinen werden in der Landwirtschaft eingesetzt, um Erntegut wie z.B. Heu oder Stroh aufzunehmen und ggf. weiterzuverarbeiten. Die Weiterverarbeitung kann u.a. ein Zerkleinern, ein Pressen und/oder ein Verpacken bzw. Umwickeln des Ernteguts beinhalten. Im Falle einer Rundballenpresse wird das Erntegut zu runden Erntegutballen verpresst, die anschließend mit einem Bindematerial umwickelt werden können. Als Bindematerial können Schnüre, Netze oder (z.B. im Falle von Gras) Folien verwendet werden, wobei letztere auch außerhalb der Ballenpresse in einem hiervon separaten Ballenwickelgerät appliziert werden können. Das Erntegut wird zunächst (normalerweise durch eine Pick-up) vom Boden aufgenommen und weiter an einen Förderrotor oder Schneidrotor übergeben, der das Erntegut über einen Zuführkanal zur Ballenbildungskammer bzw. Presskammer fördert, wo das eigentliche Verpressen erfolgt. Dort wirken Presselemente auf das Erntegut ein, die auch als Förderelemente wirken und eine umlaufende Bewegung des Ernteguts erzeugen.

Bei Pressen mit variabler Kammer wird die effektive Größe der Kammer an die zunehmende Menge von Erntegut angepasst, wobei wenigstens ein endlos umlaufendes, insgesamt flexibles Presselement einen überwiegenden Teil der Presskammer definiert. Das Presselement kann z.B. als Stabkettenförderer mit umlaufenden Ketten und dazwischen verlaufenden Stäben ausgebildet sein oder einen bzw. normalerweise mehrere Pressgurte oder -riemen aufweisen. Der jeweilige Pressriemen ist über eine Mehrzahl von drehbaren Führungsrollen bzw. Spannrollen geführt, wodurch er unter Spannung gehalten wird, und wird beim Betrieb der Rundballenpresse entsprechend einer Umlaufbewegung angetrieben. Der fertig geformte Rundballen wird heckseitig ausgeworfen, wozu eine Heckklappe geöffnet werden muss. Zur optimalen Führung des Presselements ist dieses in der Regel oberhalb der Heckklappe über wenigstens eine Führungsrolle geführt, mit welcher die Heckklappe beim Öffnen kollidieren könnte. Außerdem ist an der Heckklappe oftmals wenigstens eine Führungsrolle gelagert, über die das Presselement ebenfalls geführt ist, weshalb es beim Öffnen der Heckklappe zu einer unzureichenden Spannung im Presselement und einem hieraus resultierenden Schlupf kommen könnte. Daher ist die o.g. Führungsrolle oberhalb der Heckklappe oftmals an einer schwenkbaren Schwinge gelagert. Diese Schwinge wird beim Öffnen der Heckklappe ebenfalls geschwenkt, wodurch das Presselement ausreichend gespannt bleibt. Die Bewegung von Schwinge und Heckklappe muss dabei zeitlich koordiniert werden, um einen Schlupf des Presselements oder eine Kollision zwischen der Schwinge und der Heckklappe zu vermeiden. Im Stand der Technik weisen die Heckklappe und die Schwinge separate Antriebe auf, die sie jeweils mit dem Rahmen der Rundballenpresse verbinden. Der jeweilige Antrieb kann z.B. einen doppeltwirkenden Hydraulikzylinder aufweisen, durch den ein aktives Schwenken in beide Richtungen möglich ist. Die zeitliche Koordinierung der Antriebe wird über eine übergeordnete Steuereinheit geregelt.

Rundballenpressen sind z.B. aus DE 39 41 707 A1 und US 2007/081878 A1 bekannt.

Aufgabe der Erfindung ist es, einen verbesserten Mechanismus zum Öffnen einer Presskammer einer Rundballenpresse zur Verfügung zu stellen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, mit einem Rahmen, einer demgegenüber um eine Klappenachse schwenkbaren Heckklappe, einem endlosen, umlaufend antreibbaren Presselement, durch welches innerhalb des Rahmens eine Presskammer zur Formung eines Erntegutballens wenigstens teilweise definierbar ist, einer gegenüber dem Rahmen um eine Schwingenachse schwenkbare Spannschwinge, die wenigstens eine drehbare Schwingen-Führungsrolle aufweist, welche das Presselement führt, einem zwischen dem Rahmen und der Heckklappe wirkenden ersten Druckelement und einem auf die Spannschwinge wirkenden zweiten Druckelement.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Der Begriff "Rundballenpresse" schließt hierbei ausdrücklich auch Maschinen ein, die zusätzlich zu einem Pressen des Ernteguts zu Ballen auch ein Binden bzw. Verpacken der Ballen durchführen. Das Erntegut kann mit einer Pick-up aufgenommen werden und mit einer Fördervorrichtung, z.B. einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. In jedem Fall ist ein Zuführkanal vorgesehen, den der Erntegutstrom durchläuft, bevor er zur Presskammer gelangt. Die Rundballenpresse kann selbstfahrend ausgebildet sein oder dazu vorgesehen sein, von einem Schlepper gezogen zu werden.

Der Rahmen bildet gewissermaßen die Grundstruktur der Rundballenpresse und verleiht ihr insgesamt Stabilität. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Presskammer, nach außen abschirmt. Die Heckklappe, die schwenkbar mit dem Rahmen verbunden ist, verschließt normalerweise ein solches Gehäuse nach hinten, also entgegen der Fahrtrichtung. Durch Schwenken um die Klappenachse kann die Heckklappe geöffnet bzw. geschlossen werden.

Die Presskammer ist durch ein endloses, umlaufend antreibbares Presselement wenigstens teilweise definierbar bzw. begrenzbar ist. Das Presselement begrenzt die Presskammer, in welcher der Erntegutballen geformt wird, und definiert somit ihre effektive Größe wenigstens teilweise. Es kann insbesondere als ein oder mehrere endlose Pressriemen bzw. -gurte ausgebildet sein, alternativ aber auch z.B. als Kettenstabförderer. In jedem Fall ist es umlaufend antreibbar, wozu es z.B. über eine Mehrzahl von Führungsrollen bzw. Spannrollen geführt ist, von denen wenigstens eine mit einem Antrieb verbunden ist. Die jeweilige Führungsrolle ist in aller Regel rotationssymmetrisch ausgebildet, allerdings ist ihre Oberfläche, soweit sie mit dem Presselement in Kontakt kommt, nicht notwendigerweise glatt, sondern kann geeignete Strukturen zum Eingriff mit dem Presselement aufweisen. Jede Führungsrolle dient zum einen der Führung des Presselements, zum anderen aber in der Regel auch zur Aufrechterhaltung einer Spannung (d.h. Zugspannung) im Presselement. Diese Spannung wiederum dient dazu, einen Schlupf zwischen Presselement und Führungsrollen zu verhindern, d.h. den ordnungsgemäßen Antrieb sicherzustellen.

Wenigstens eine dieser Führungsrollen, die hier als Schwingen-Führungsrolle bezeichnet wird, ist an einer Spannschwinge gelagert, die gegenüber dem Rahmen um eine Schwingenachse schwenkbar ist. Die Schwingenachse ebenso wie die Klappenachse verlaufen in aller Regel parallel zur Querachse der Rundballenpresse. In aller Regel ist die Spannschwinge bezüglich einer Hochachse der Rundballenpresse wenigstens teilweise oberhalb der Heckklappe angeordnet. Sie führt das Presselement d.h. das Presselement liegt an der jeweiligen Schwingen-Führungsrolle an, so dass es bei seiner umlaufenden Bewegung (wenigstens teilweise) durch die Schwingen-Führungsrolle geführt ist. Eine Aufgabe der Schwingen-Führungsrolle sowie der Spannschwinge insgesamt ist normalerweise, das Presselement in unterschiedlichen Zuständen der Rundballenpresse unter Spannung zu halten und Schlupf zu verhindern.

Des Weiteren weist die Rundballenpresse wenigstens zwei Druckelemente auf. Wie nachfolgend noch erläutert wird, ist jedes Druckelement dazu ausgebildet, wenigstens zeitweise eine Druckkraft (im Gegensatz zu einer Zugkraft) zu erzeugen. Ein erstes Druckelement wirkt zwischen dem Rahmen und der Heckklappe, d.h. es kann eine Druckkraft (genauer: ein Kräftepaar) zwischen Rahmen und Heckklappe erzeugen. Ein zweites Druckelement wirkt auf die Spannschwinge und kann eine Druckkraft auf diese erzeugen. Das erste Druckelement kann direkt auf den Rahmen und die Heckklappe wirken oder indirekt, über wenigstens ein zwischengeordnetes zusätzliches Element, das die Druckkraft überträgt. Sofern ein derartiges Element vorgesehen ist, kann dieses die Druckkraft ggf. auch umlenken oder (durch Hebelwirkung) verstärken bzw. abschwächen.

Erfindungsgemäß wirkt das zweite Druckelement zwischen der Heckklappe und der Spannschwinge und wenigstens ein Druckelement ist als Linearaktor ausgebildet, wobei durch Längenexpansion des ersten Druckelements die Heckklappe und die Spannschwinge schwenkbar sind, um durch Aufwärtsschwenken der Heckklappe ein Auswerfen des Erntegutballens zu ermöglichen, und durch Längenexpansion des zweiten Druckelements die Heckklappe abwärts schwenkbar ist. Auch das zweite Druckelement kann direkt oder indirekt auf die Heckklappe und die Spannschwinge wirken. Da das erste Druckelement zwischen dem Rahmen und der Heckklappe wirkt und das zweite Druckelement zwischen der Heckklappe und der Spannschwinge wirkt, sind die beiden Druckelemente kinematisch bzw. hinsichtlich des Kraftflusses gewissermaßen in Reihe angeordnet. Man könnte auch sagen, dass sich die Spannschwinge über das zweite Druckelement an der Heckklappe abstützen kann und somit indirekt, über das erste Druckelement, am Rahmen.

Durch Längenexpansion des ersten Druckelements sind die Heckklappe und die Spannschwinge schwenkbar, d. h. sie können um ihre jeweilige Schwenkachse eine Schwenkbewegung ausführen, wenn das erste Druckelement expandiert. Das erste Druckelement ist - normalerweise direkt, ggf. auch indirekt - über einen Rahmen-Anbindungspunkt (bspw. ein Rahmen-Schwenklager) mit dem Rahmen verbunden und über einen ersten Klappen-Anbindungspunkt mit der Heckklappe. Zwischen diesen Anbindungspunkten kann das erste Druckelement in der Länge expandieren oder kontrahieren. Entsprechend ist das zweite Druckelement (direkt oder indirekt) über einen zweiten Klappen-Anbindungspunkt mit der Heckklappe verbunden und über einen Schwingen-Anbindungspunkt mit der Spannschwinge, zwischen welchen Anbindungspunkten es expandieren und kontrahieren kann. Die Expansion des ersten Druckelements entspricht der beschriebenen Schwenkbewegung der Heckklappe und - aufgrund der Ankopplung durch das zweite Druckelement - einer Schwenkbewegung der Spannschwinge. Selbstverständlich muss das zweite Druckelement wenigstens während dieser Schwenkbewegung eine Druckkraft zwischen der Heckklappe und der Spannschwinge übertragen. Dies kann insbesondere deshalb gelten, wenn die im Presselement herrschende Spannung über die Schwingen-Führungsrolle eine entgegengesetzte Kraft erzeugt. Das Aufwärtsschwenken der Heckklappe entspricht einem Öffnen derselben, was nötig ist, wenn ein fertig geformter Erntegutballen ausgeworfen werden soll. Das zusätzlich erfolgende Schwenken der Spannschwinge kann insbesondere dazu dienen, eine Kollision zwischen der Heckklappe und der Spannschwinge zu vermeiden und/oder mittels der Schwingen-Führungsrolle(n) eine Spannung im Presselement aufrechtzuerhalten. Durch Längenexpansion des zweiten Druckelements kann die Heckklappe abwärts geschwenkt werden, was einem Schließen der Heckklappe entspricht. Dabei erfolgt selbstverständlich gleichzeitig eine Längenkontraktion des ersten Druckelements, das zwischen Heckklappe und Rahmen zwischengeordnet ist. Das zweite Druckelement kann sich bei seiner Expansion an der Spannschwinge abstützen, die normalerweise, wie bereits oben erwähnt, über die wenigstens eine Schwingen-Führungsrolle durch die Spannung im Presselement beaufschlagt ist. Unter Umständen kann der Spannschwinge zusätzlich ein Anschlag zugeordnet sein, über den sie sich am Rahmen abstützen kann.

Dabei ist wenigstens ein Druckelement als Linearaktor ausgebildet, welcher z.B. elektrisch, hydraulisch oder pneumatisch betreibbar sein kann. In jedem Fall ist der Linearaktor ansteuerbar, wodurch die Längenexpansion des entsprechenden Druckelements aktiv beeinflussbar ist. Wie nachfolgend noch erläutert wird, lässt sich die Erfindung mit nur einem Linearaktor realisieren, während das andere Druckelement als passives Bauteil ausgebildet sein kann.

Es ist möglich, dass wenigstens ein Druckelement z.B. als doppeltwirkender Zylinder ausgebildet ist. Alternativ oder zusätzlich ist insbesondere bevorzugt, dass wenigstens ein Druckelement als einfachwirkender Zylinder ausgebildet ist, normalerweise als Hydraulikzylinder. Entsprechend kann dieses Druckelement eine statische oder dynamische Druckkraft aufbringen und aktiv expandieren, es kann jedoch nicht aktiv kontrahieren, sondern nur passiv, d. h. durch äußere Krafteinwirkung. Die Erzeugung einer statischen Zugkraft, die einem Auseinanderziehen des Druckelements durch äußere Kräfte entgegenwirkt, ist u.U. möglich. Wie durch den Begriff "Druckelement" bereits suggeriert wird, ist es bevorzugt, dass auch das andere Druckelement, selbst wenn es nicht als einfachwirkender Zylinder ausgebildet ist, im eingebauten Zustand in der Rollenballenpresse Druckkräfte überträgt, wohingegen Zugkräfte allenfalls statisch übertragen werden. In diesem Fall ist die Kontraktion beider Druckelemente nur passiv möglich, d.h. sie können durch externe Kräfte zusammengedrückt werden, sich aber nicht aktiv zusammenziehen. D.h. die erfindungsgemäße Rundballenpresse kann ohne einen doppeltwirkenden Zylinder realisiert werden und ermöglicht dennoch die notwendigen Schwenkbewegungen der Heckklappe sowie der Spannschwinge. Trotz dieser vergleichsweise einfachen und kostengünstigen Mechanik hat sich gezeigt, dass aufgrund der direkten Verbindung der Heckklappe zur Spannschwinge über das zweite Druckelement eine optimale Koordinierung der beiden Schwenkbewegungen möglich ist, die insbesondere eine ausreichende Spannung im Presselement gewährleistet.

Gemäß einer Ausgestaltung ist ein Druckelement als Druckfeder ausgebildet. Hierbei kann es sich insbesondere um eine mechanische Feder, bspw. eine Schraubenfeder handeln, wenngleich eine Verwendung einer pneumatischen Feder im Rahmen der Erfindung nicht ausgeschlossen ist. In jedem Fall arbeitet die Druckfeder insofern als rein "passives" Element, als sie in keinem Stadium des Bewegungszyklus' angesteuert werden muss (bzw. kann). Die Ansteuerung beschränkt sich hierbei auf ein einziges Druckelement, das als einfachwirkender Zylinder ausgebildet ist. Die Längenkontraktion des Zylinders wird dabei wenigstens anteilig durch die Längenexpansion der Druckfeder angetrieben.

Bevorzugt ist das erste Druckelement als einfachwirkender Zylinder ausgebildet. Diese Ausgestaltung hat sich als vorteilhaft erwiesen, da hiermit zumindest das Aufwärtsschwenken der Heckklappe exakt gesteuert werden kann, nämlich über die ansteuerbare Expansion des Zylinders. Gleiches gilt im Wesentlichen für das Abwärtsschwenken der Heckklappe, da auch die Kontraktion des Zylinders steuerbar bzw. kontrollierbar ist, auch wenn der Zylinder dabei keine Arbeit verrichtet. Bei dieser Ausgestaltung kann das zweite Druckelement wie oben beschrieben als Druckfeder ausgebildet sein.

Alternativ oder zusätzlich zu einem einfachwirkenden Zylinder kann bei den o.g. Ausführungsformen z.B. auch ein doppeltwirkend konzipierter Hydraulikzylinder eingesetzt werden, bei dem allerdings nur eine für die Längenexpansion genutzte erste Zylinderseite aktiv mit Flüssigkeit beaufschlagt wird, während die andere, zweite Zylinderseite passiv genutzt wird, um dort Hydraulikflüssigkeit zu speichern, wenn diese bei einer passiven Längenkontraktion aus der ersten Zylinderseite herausströmt. D.h. dieser Zylinder weist, wie ein doppeltwirkend wirkender Zylinder, zwei Hydraulikanschlüsse auf, wird aber effektiv wie ein einfachwirkender Zylinder betrieben.

Gemäß einer anderen vorteilhaften Ausgestaltung sind beide Druckelemente als einfachwirkende Zylinder ausgebildet. Diese Ausführungsform ist insofern vorteilhaft, als über die Ansteuerung der Zylinder sowohl die Position der Heckklappe relativ zum Rahmen als auch die Position der Spannschwinge relativ zur Heckklappe aktiv beeinflusst werden kann, und somit auch die Position der Spannschwinge relativ zum Rahmen, wobei im Allgemeinen die Krafteinwirkung seitens des Presselements die genannten Positionen beeinflusst. Ein ähnliches Ausmaß an Kontrolle und Präzision ist bei Einsatz einer Druckfeder nicht oder zumindest schwieriger zu erreichen. Andererseits ist diese Lösung aufwändiger und mit höheren Kosten verbunden, da ein zweiter Zylinder notwendig ist, der z.B. einen eigenen Hydraulikanschluss benötigt und der außerdem koordiniert mit dem anderen Zylinder angesteuert werden muss.

Gemäß einer bevorzugten Ausgestaltung weist die Spannschwinge einen bezüglich einer Längsachse der Rundballenpresse hinter der Schwingenachse angeordneten hinteren Schwingenabschnitt auf, wobei das zweite Druckelement zwischen der Heckklappe und dem hinteren Schwingenabschnitt wirkt, wobei durch Längenexpansion des ersten Druckelements die Heckklappe und der hintere Schwingenabschnitt aufwärts schwenkbar sind. Der hintere Schwingenabschnitt, der auch als hinterer Schwingenarm ausgebildet sein kann, ist bezüglich der Längsachse, man könnte auch sagen, entgegen der Fahrtrichtung, hinter der Schwingenachse angeordnet. Das zweite Druckelement setzt derart am hinteren Schwingenabschnitt an, dass beim Aufwärtsschwenken der Heckklappe eine Kraft bzw. ein Drehmoment übertragen wird, das ebenfalls ein Aufwärtsschwenken des hinteren Schwingenabschnitts bewirkt. Hierdurch kann insbesondere eine Kollision der Heckklappe mit dem hinteren Schwingenabschnitt vermieden werden, d.h. der hintere Schwingenabschnitt kann der Heckklappe gewissermaßen ausweichen. Der Begriff "hinterer Schwingenabschnitt" ist nicht dahingehend auszulegen, dass es zwangsläufig einen mittleren oder vorderen Schwingenabschnitt geben muss. U.U. kann die Spannschwinge überwiegend oder vollständig durch den hinteren Schwingenabschnitt gebildet sein.

Bevorzugt weist der hintere Schwingenabschnitt eine drehbare hintere Schwingen-Führungsrolle auf, welche das Presselement innenseitig führt. Da der hintere Schwingenabschnitt bezüglich der Längsachse hinter der Schwingenachse angeordnet ist, gilt dies auch für die hintere Schwingen-Führungsrolle. Sie führt das Presselement innenseitig, d.h. sie ist auf der Innenseite des insgesamt schleifenartig geschlossenen Presselements angeordnet, also in dem Raum, den das Presselement umschließt. Beim Aufwärtsschwenken des hinteren Schwingenabschnitts drückt die hintere Schwingen-Führungsrolle innenseitig gegen das Presselement, wobei normalerweise eine wenigstens anteilig aufwärts wirkende Kraft auf das Presselement übertragen wird, die zu dessen Spannung beiträgt.

Gemäß einer typischen Ausgestaltung weist die Heckklappe wenigstens eine drehbare Klappen-Führungsrolle auf, welche das Presselement innenseitig führt. D.h. die Heckklappe dient nicht nur zum Verschließen eines Gehäuses bzw. zum Abschirmen der Presskammer nach hinten, sondern sie dient, wie die Spannschwinge, auch zur Führung und zum Spannen des Presselements. Selbstverständlich kann die Heckklappe auch eine Mehrzahl von Klappen-Führungsrollen aufweisen. Durch die Klappen-Führungsrolle erfolgt eine weitere Kraftübertragung auf die Heckklappe, nämlich seitens des Presselements, welche den Schwenkvorgang auch beeinflusst.

Insbesondere kann die Spannung des Presselements dazu führen, dass das Eigengewicht der Heckklappe nicht ausreicht, um sie abwärts zu schwenken. Das erste Druckelement kann keine unterstützende (dynamische) Zugkraft erzeugen. Insofern ist hier ein Abwärtsdrücken durch das zweite Druckelement nötig, um den Schwenkvorgang auszulösen. Auch ist bei dieser Ausführungsform eine Koordinierung der Schwenkbewegungen von Heckklappe und Spannschwinge besonders wichtig, da ein zu spätes Schwenken der Spannschwinge zu einem Verlust von Spannung im Presselement und einem möglichen Schlupf führen könnte. Die entsprechende Koordinierung wird aber durch die erfindungsgemäße Kopplung über das zweite Druckelement wesentlich erleichtert.

Vorteilhaft kann die Spannschwinge nicht nur zum Spannen bzw. Führen des Presselements genutzt werden, sondern auch zum Auswerfen des fertigen Erntegutballens. Mit einem oben beschriebenen hinteren Schwingenabschnitt ist dies allerdings kaum umsetzbar. Daher sieht eine bevorzugte Ausgestaltung vor, dass die Spannschwinge einen entlang der Längsachse vor der Schwingenachse angeordneten vorderen Schwingenabschnitt mit einem Auswerferelement aufweist, das dazu eingerichtet ist, beim Schwenken der Spannschwinge wenigstens indirekt auf den Erntegutballen einzuwirken, um diesen auszuwerfen. Dabei ist das Schwenken der Spannschwinge gemeint, welches über die Wirkung des zweiten Druckelements an das Aufwärtsschwenken der Heckklappe gekoppelt ist. Insbesondere kann das Auswerferelement dazu eingerichtet sein, beim Aufwärtsschwenken des hinteren Schwingenabschnitts wenigstens indirekt auf den Erntegutballen einzuwirken. Soweit vorhanden, liegen der vordere und hintere Schwingenabschnitt einander bezüglich der Schwingenachse (entlang der Längsachse) gegenüber, d.h. ersterer liegt vor der Schwingenachse und letzterer dahinter. Dementsprechend erfolgt bei einem Aufwärtsschwenken des hinteren Schwingenabschnitts ein Abwärtsschwenken des vorderen Schwingenabschnitts und umgekehrt. Durch geeignete Anordnung der Schwingenabschnitte zueinander kann insbesondere erreicht werden, dass ein Teil des vorderen Schwingenabschnitts, an dem das Auswerferelement angeordnet ist, sich beim Aufwärtsschwenken des hinteren Schwingenabschnitts nicht nur abwärts, sondern auch nach hinten bewegt.

Bei der entsprechenden Bewegung wirkt das Auswerferelement direkt oder indirekt auf den Erntegutballen ein, so dass dieser nach hinten gedrückt wird, was sein Auswerfen zumindest unterstützt. Wenngleich der vordere Schwingenabschnitt normalerweise in Kombination mit dem hinteren Schwingenabschnitt eingesetzt wird, ist es grundsätzlich denkbar, dass die Spannschwinge einen vorderen, aber keinen hinteren Schwingenabschnitt aufweist.

Unter Umständen wäre es denkbar, dass das Auswerferelement das Presselement umgeht oder durch eine Aussparung im Presselement hindurchgreift, um direkt auf den Erntegutballen einzuwirken. Dies ist allerdings insbesondere bei einem Presselement mit einem oder mehreren Pressriemen schwer zu realisieren. Es ist daher bevorzugt, dass das Auswerferelement dazu eingerichtet ist, zum Auswerfen des Erntegutballens auf das Presselement einzuwirken. D.h. das Auswerferelement wirkt auf das Presselement ein, welches in Kontakt mit dem Rundballen steht, und übt so eine Kraft auf den Rundballen aus. Es drückt den Rundballen also mittelbar, durch das Presselement. Das Presselement steht mit seiner Außenseite mit dem Rundballen in Kontakt und das Auswerferelement ist innenseitig des Presselements angeordnet.

Bevorzugt ist das Auswerferelement als drehbare Auswerferrolle ausgebildet. Die Auswerferrolle ist drehbar am vorderen Schwingenabschnitt gelagert. Bei Kontakt mit dem Presselement kann sie sich drehen, um dessen Bewegung zu folgen. Die Auswerferrolle könnte auch selbst angetrieben sein, was aber im Allgemeinen unnötig aufwändig zu realisieren ist.

Der vordere Schwingenabschnitt kann des Weiteren wenigstens eine drehbare vordere Schwingen-Führungsrolle aufweisen, welche das Presselement außenseitig führt. D.h. diese Schwingen-Führungsrolle liegt außenseitig am Presselement an. Dies wiederum hat zur Folge, dass sie bei steigender Spannung im Presselement, z.B. durch das Füllen der Presskammer, mit einer (bezüglich des Presselements) nach außen wirkenden Kraft beaufschlagt wird, die normalerweise eine aufwärts gerichtete Komponente aufweist. Das hieraus resultierende Drehmoment bezüglich der Schwingenachse ist gleichgerichtet zu demjenigen, das aus der Kraft auf die hintere Schwingen-Führungsrolle resultiert, sofern letztere vorhanden ist. D.h. beide Drehmomente wirken in diesem Fall additiv auf eine Schwenkbewegung der Schwinge hin, die normalerweise einem Abwärtsschwenken des hinteren Schwingenabschnitts und einem Aufwärtsschwenken des vorderen Schwingenabschnitts entspricht.

Die Aufgabe wird weiterhin gelöst mit einem Verfahren zum Betreiben einer Rundballenpresse mit einem Rahmen, einer demgegenüber um eine Klappenachse schwenkbaren Heckklappe, einem endlosen, umlaufend antreibbaren Presselement, durch welches innerhalb des Rahmens eine Presskammer zur Formung eines Erntegutballens wenigstens teilweise definierbar ist, einer gegenüber dem Rahmen um eine Schwingenachse schwenkbare Spannschwinge, die wenigstens eine drehbare Schwingen-Führungsrolle aufweist, welche das Presselement führt, einem zwischen dem Rahmen und der Heckklappe wirkenden ersten Druckelement und einem auf die Spannschwinge wirkenden zweiten Druckelement.

Erfindungsgemäß wirkt das zweite Druckelement zwischen der Heckklappe und der Spannschwinge und wenigstens ein Druckelement ist als Linearaktor ausgebildet, wobei das Verfahren die folgenden Schritte umfasst:
- Schwenken der Heckklappe und der Spannschwinge durch Längenexpansion des ersten Druckelements, wobei die Heckklappe aufwärts geschwenkt wird;
- Auswerfen des Erntegutballens; und
- Abwärtsschwenken der Heckklappe durch Längenexpansion des zweiten Druckelements.

Die genannten Begriffe wurden bereits oben mit Bezug auf die erfindungsgemäße Rundballenpresse erläutert und werden daher nicht nochmals erklärt. Vorteilhafte Ausgestaltungen des erfindungsgemäßen Verfahrens entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Schnittdarstellung einer erfindungsgemäßen Rundballenpresse gemäß einer ersten Ausführungsform der Erfindung mit leerer Presskammer;
- Fig. 2: eine Schnittdarstellung der Rundballenpresse aus Fig.1 mit gefüllter Presskammer;
- Fig. 3: eine Schnittdarstellung der Rundballenpresse aus Fig.1 beim Auswerfen eines Erntegutballens; sowie
- Fig. 4: eine Fig. 1 entsprechende Schnittdarstellung einer erfindungsgemäßen Rundballenpresse gemäß einer zweiten Ausführungsform.

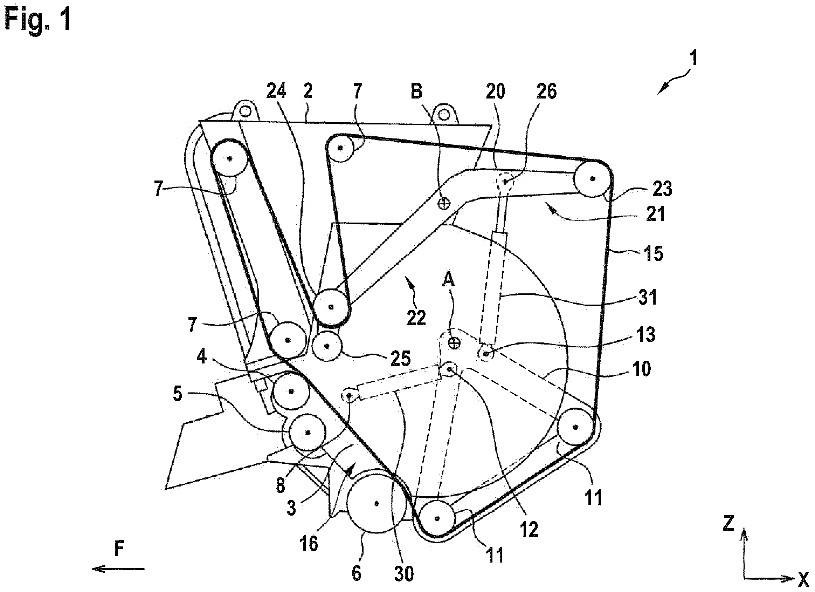

Fig. 1 zeigt eine Schnittdarstellung einer Rundballenpresse 1, genauer gesagt von Teilen derselben, gemäß einer ersten Ausführungsform. Der Übersichtlichkeit halber wurden verschiedene Elemente, die nicht Gegenstand der Erfindung sind, weggelassen. Hierzu zählen insbesondere Laufräder, auf denen die Rundballenpresse 1 aufsteht, Zuführelemente (wie eine Pick-up und ein Förderrotor) oder eine Deichsel, mittels derer die Rundballenpresse 1 an einen Schlepper angehängt werden kann. Es könnte sich aber auch um eine selbstfahrende Rundballenpresse 1 handeln.

Erkennbar ist ein Rahmen 2, der für die strukturelle Stabilität sorgt und ein hier nicht dargestelltes Gehäuse aufweist. Wesentliche Teile des Rahmens 2 sind Seitenwände 3, von denen sich jede in Richtung einer Längsachse X sowie in Richtung einer Hochachse Z der Rundballenpresse 1 erstreckt. Die nach hinten weisende Längsachse X ist antiparallel zur Fahrtrichtung F. In den Schnittdarstellungen der Figuren ist jeweils nur eine der entlang der Querachse beabstandeten Seitenwände 3 sichtbar.

An dem Rahmen 1 sind mehrere Walzen bzw. Rollen drehbar gelagert. In einem vorderen Bereich sind zwei Presswalzen 4, 5 erkennbar sowie weiter unten sowie hinter diesen eine Starterwalze 6. Außerdem sind eine Mehrzahl von Rahmen-Führungsrollen 7 erkennbar, über die ein endloses Presselement 15 geführt ist. Letzteres ist in diesem Fall durch eine Mehrzahl von Pressriemen gebildet, die durch eine oder mehrere Rahmen-Führungsrollen 7, welche als Antriebselemente fungieren, umlaufend antreibbar sind. Alternativ kann das Presselement z.B. auch durch einen einzigen Pressriemen gebildet sein. Das Presselement 15 ist außerdem über zwei Klappen-Führungsrollen 11 einer Heckklappe 10 sowie über zwei Schwingen-Führungsrollen 23, 24 einer Spannschwinge 20 geführt.

Die Heckklappe 10 ist relativ zum Rahmen um eine Klappenachse A schwenkbar. Die Klappen-Führungsrollen 11 sind ungefähr gleichem Abstand zur Klappenachse A angeordnet. Beide Klappen-Führungsrollen 11 liegen, ebenso wie die Rahmen-Führungsrollen 7, innenseitig an dem Presselement 15 an. Die Spannschwinge 20 ist bezüglich der Hochachse Z überwiegend oberhalb der Heckklappe 10 angeordnet und gegenüber dem Rahmen um eine Schwingenachse B schwenkbar. Eine hintere Schwingen-Führungsrolle 23 ist an einem hinteren Schwingenabschnitt 21 angeordnet, der bezüglich der Längsachse X hinter der Schwingenachse B angeordnet ist. Sowohl die Klappenachse A als auch die Schwingenachse B verlaufen parallel zur Querachse der Rollenballenpresse 1 und somit senkrecht zur Zeichenebene der Figuren. An einem bezüglich der Längsachse X vor der Schwingenachse B angeordneten vorderen Schwingenabschnitt 22 ist zum einen eine vordere Schwingen-Führungsrolle 24 angeordnet, die außenseitig am Presselement 15 anliegt, sowie zum anderen eine Auswerferrolle 25, die in Fig. 1 im Abstand zum Presselement 15 gehalten ist. Ein als erstes Druckelement fungierender, einfachwirkender erster Zylinder 30 ist über ein Rahmen-Schwenklager 8 mit der Seitenwand 3 verbunden sowie über ein erstes Klappen-Schwenklager 12 mit der Heckklappe 10. Ein als zweites Druckelement fungierender, ebenfalls einfachwirkender zweiter Zylinder 31 ist über ein zweites Klappen-Schwenklager 13 mit der Heckklappe 10 verbunden sowie über einen Schwingen-Schwenklager 26 mit dem hinteren Schwingenabschnitt 21. Beide Zylinder 30, 31 sind vorliegend als Hydraulikzylinder ausgebildet und können lediglich eine Druckkraft zwischen ihren jeweiligen Schwenklagern 8, 12, 13, 26 ausüben.

Insgesamt halten die Führungsrollen 7, 11, 23, 24 das Presselement 15 unter Spannung. Die Presswalzen 4, 5, die Starterwalze 6 sowie das Presselement 15 definieren gemeinsam eine Presskammer 16 variabler Größe, in der sukzessive ein Erntegutballen 50 geformt wird. In Fig. 1 ist die Presskammer 16 leer, wobei das Presselement 15 unmittelbar über eine obere Presswalze 4 sowie die Starterwalze 6 geführt ist. Außerdem ist die Heckklappe 10 abgesenkt und somit geschlossen. Der erste Zylinder 30 kann in dieser Situation drucklos geschaltet sein und hat seine minimale Länge angenommen, d.h. er ist vollständig kontrahiert. Die Spannschwinge 20 befindet sich in einer Stellung, in der der hintere Schwingenabschnitt 21 annähernd waagerecht verläuft bzw. leicht angehoben ist. Der zweite Zylinder 31 ist ausgefahren, u.U. auf seine maximale Länge, d.h. er ist (ggf. vollständig) expandiert. Er übt einerseits eine Kraft auf die Heckklappe 10 aus, die diese in Richtung der abgesenkten Stellung drückt, sowie andererseits eine Kraft auf den hinteren Schwingenabschnitt 21. Aus letzterer Kraft resultiert ein Drehmoment, aufgrund dessen die Spannschwinge 20 über die hintere Schwingen-Führungsrolle 23 sowie die vordere Schwingen-Führungsrolle 24 das Presselement 15 unter Spannung hält. Soweit die Kraft des zweiten Zylinders 31 nicht ausreicht, die Heckklappe 10 in der abgesenkten Stellung zu halten, kann die Heckklappe 10 auch optional durch ein hier nicht dargestelltes Arretierungselement gesichert werden.

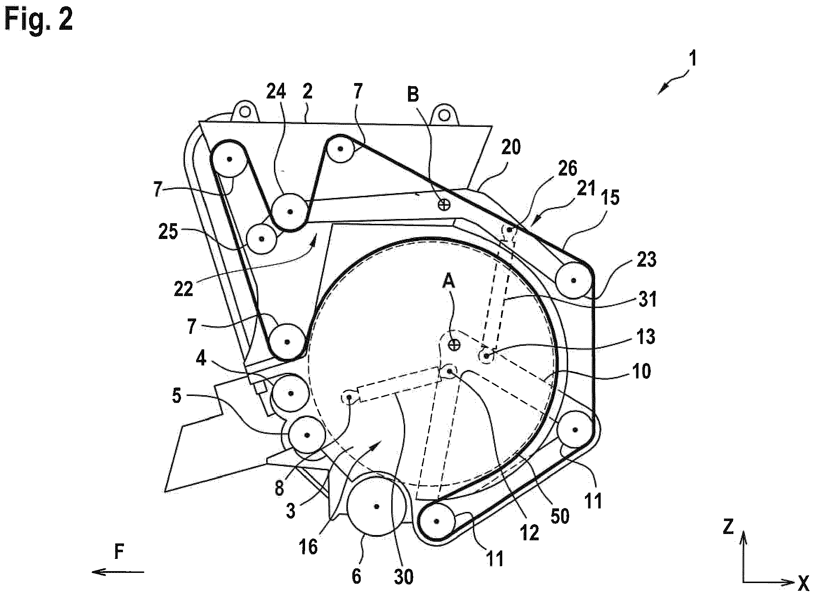

Beim Betrieb der Rollenballenpresse 1 wird Erntegut in die Presskammer 16 gefördert und dort sukzessive zu einem Erntegutballen 50 geformt. Dieser wächst nach und nach an, bis er schließlich eine in Fig. 2 dargestellte Maximalgröße erreicht hat. Um den anwachsenden Erntegutballen 50 zu umspannen, ist ein immer größerer Anteil des Presselement 15 um die Presskammer 16 angeordnet. Dies wird nach und nach durch eine Schwenkbewegung der Spannschwinge 20 ausgeglichen, bei der sich der hintere Schwingenabschnitt 21 mit der hinteren Schwingen-Führungsrolle 23 abwärts bewegt und der vordere Schwingenabschnitt 22 mit der vorderen Schwingen-Führungsrolle 24 aufwärts bewegt. Dementsprechend kontrahiert der zweite Zylinder 31 nach und nach, was allerdings insofern passiv geschieht, als der zweite Zylinder 31 keine Zugkräfte erzeugt. Bei vollständig gefüllter Presskammer 16, wie in Fig. 2 dargestellt, sind beide Zylinder 30, 31 voll kontrahiert, haben also ihre minimale Länge angenommen.

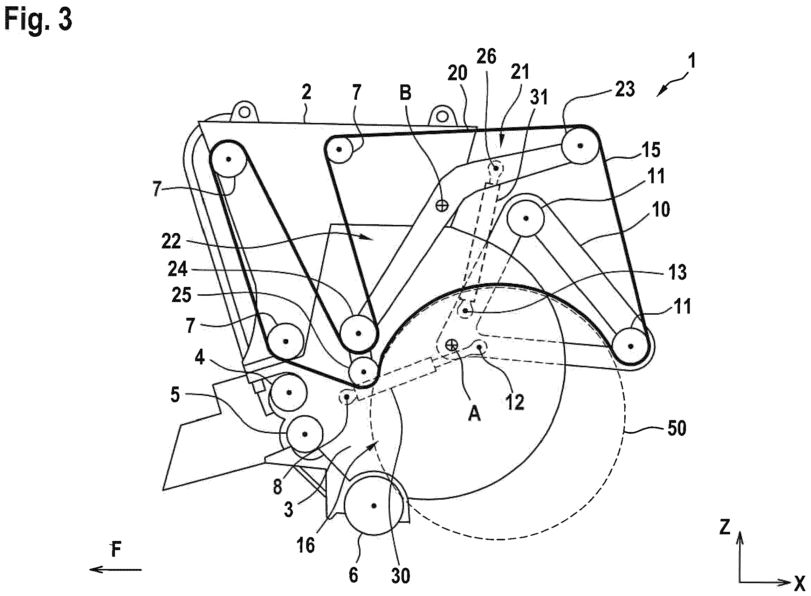

Der fertig geformte Erntegutballen 50 wird anschließend nach hinten ausgeworfen. Hierzu wird die Heckklappe 10 aufwärts geschwenkt, indem mittels des ersten Zylinders 30 eine Druckkraft ausgeübt wird, wobei der erste Zylinder 30 ausfährt. Da die Spannschwinge 20 über den vollständig kontrahierten zweiten Zylinder 31 an die Heckklappe 10 gekoppelt ist, wird sie zwangsläufig ebenfalls geschwenkt, wobei sich der hintere Schwingenabschnitt 21 aufwärts bewegt und der vordere Schwingenabschnitt 22 abwärts. Hierdurch wird eine Kollision zwischen der Heckklappe 10 und der Spannschwinge 20 verhindert und außerdem die Spannung im Presselement 15 aufrechterhalten. Die Spannschwinge 20 schwenkt so weit, dass der hintere Schwingenabschnitt 21 über die in Fig. 1 gezeigte Stellung hinaus bis in die in Fig. 3 dargestellte Stellung gelangt. Entsprechend schwenkt der vordere Schwingenabschnitt 22 abwärts und nach vorne, bis die Auswerferrolle 25 gegen einen Abschnitt des Presselements 15 gedrückt wird, der in Kontakt mit dem Erntegutballen 50 steht. Somit übt die Auswerferrolle 25 über das Presselement 15 eine anteilig nach hinten gerichtete Kraft auf den Erntegutballen 50 aus, wodurch dessen Auswerfen ausgelöst oder zumindest unterstützt wird.

Aus der in Fig. 3 dargestellten offenen Stellung kann die Heckklappe 10 u.U. nicht allein durch ihr Eigengewicht wieder abwärts schwenken bzw. nur mit einer Verzögerung, da die Spannung im Presselement 15 diesem Schwenkvorgang entgegenstehen kann. Um die Heckklappe 10 in effektiver Weise zu schließen, wird einerseits der Druck im ersten Zylinder 30 reduziert und andererseits über den zweiten Zylinder 31 eine Druckkraft ausgeübt, durch welche die Heckklappe 10 abwärts gedrückt wird. Im weiteren Verlauf des Schließens sorgt das Drehmoment, welches aufgrund der Spannung im Presselement 15 über die Schwingen-Führungsrollen 23, 24 auf die Spannschwinge 20 wirkt, dafür, dass die Spannschwinge 20 wieder in die in Fig. 1 gezeigte Stellung zurückschwenkt.

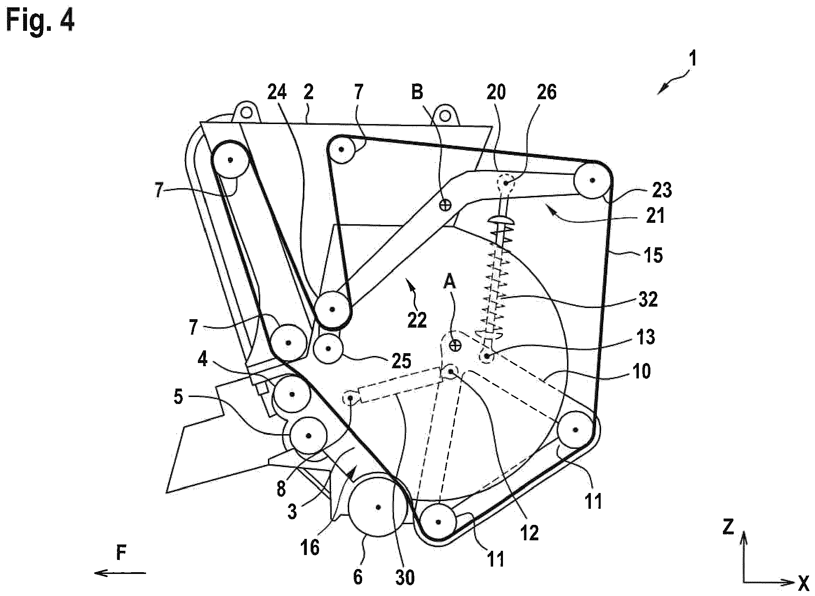

Fig. 4 zeigt eine zweite Ausführungsform einer erfindungsgemäßen Rundballenpresse, die weitestgehend mit der in Fig. 1 bis 3 gezeigten Ausführungsform übereinstimmt und insoweit nicht nochmals erläutert wird. Allerdings ist in diesem Fall statt des zweiten Zylinders 31 eine Druckfeder 32 als zweites Druckelement vorgesehen. Während des Anwachsens des Erntegutballens 50 schwenkt die Spannschwinge 20 wie oben beschrieben, wobei die Druckfeder 32 zwischen Spannschwinge 20 und Heckklappe 10 zusammengedrückt wird. Wenn die Heckklappe 10 bei dieser Ausführungsform geöffnet werden soll, wird wiederum über den ersten Zylinder 30 eine Druckkraft ausgeübt und der erste Zylinder 30 expandiert, wobei durch Kraftübertragung über die Heckklappe 10 und die Druckfeder 32 auch die Spannschwinge 20 geschwenkt wird. Hierbei kann es zu einer Längenveränderung der Druckfeder 32 kommen, letztlich wird allerdings eine ähnliche Stellung der Spannschwinge 20 erreicht wie in Fig. 3. Die Druckfeder 32 ist gegenüber Fig.4 zusammengedrückt, weshalb sie ein Drehmoment auf die Heckklappe 10 ausübt. Sobald die Druckkraft seitens des ersten Zylinders 30 reduziert wird, expandiert die Druckfeder 32, der Zylinder 30 zieht sich zusammen und die Heckklappe 10 schwenkt abwärts.

## Patentansprüche

1. Rundballenpresse (1) mit einem Rahmen (2), einer demgegenüber um eine Klappenachse (A) schwenkbaren Heckklappe (10), einem endlosen, umlaufend antreibbaren Presselement (15), durch welches innerhalb des Rahmens (2) eine Presskammer (16) zur Formung eines Erntegutballens (50) wenigstens teilweise definierbar ist, einer gegenüber dem Rahmen (2) um eine Schwingenachse (B) schwenkbare Spannschwinge (20), die wenigstens eine drehbare Schwingen-Führungsrolle (23, 24) aufweist, welche das Presselement (15) führt, einem zwischen dem Rahmen (2) und der Heckklappe (10) wirkenden ersten Druckelement (30) und einem auf die Spannschwinge (20) wirkenden zweiten Druckelement (31, 32),
wobei das zweite Druckelement (31, 32) zwischen der Heckklappe (10) und der Spannschwinge (20) wirkt und wenigstens ein Druckelement (30, 31, 32) als Linearaktor ausgebildet ist, wobei durch Längenexpansion des ersten Druckelements (30) die Heckklappe (10) und die Spannschwinge (20) schwenkbar sind, um durch Aufwärtsschwenken der Heckklappe (10) ein Auswerfen des Erntegutballens (50) zu ermöglichen,
**dadurch gekennzeichnet, dass**
durch Längenexpansion des zweiten Druckelements (31, 32) die Heckklappe (10) abwärts schwenkbar ist.

2. Rundballenpresse nach Anspruch 1, **dadurch gekennzeichnet, dass** wenigstens ein Druckelement (30, 31, 32) als einfachwirkender Zylinder ausgebildet ist.

3. Rundballenpresse nach einem der vorangehenden Ansprüche, **dadurch gekennzeichnet, dass** ein Druckelement (30, 31, 32) als Druckfeder ausgebildet ist.

4. Rundballenpresse nach einem der vorangehenden Ansprüche, **dadurch gekennzeichnet, dass** das erste Druckelement (30) als einfachwirkender Zylinder ausgebildet ist.

5. Rundballenpresse nach Anspruch 1 oder 2, **dadurch gekennzeichnet, dass** beide Druckelemente (30, 31, 32) als einfachwirkende Zylinder ausgebildet sind.

6. Rundballenpresse nach einem der vorangehenden Ansprüche, **dadurch gekennzeichnet, dass** die Spannschwinge einen bezüglich einer Längsachse (X) der Rundballenpresse (1) hinter der Schwingenachse (B) angeordneten hinteren Schwingenabschnitt (21) aufweist, wobei das zweite Druckelement (31, 32) zwischen der Heckklappe (10) und dem hinteren Schwingenabschnitt (21) wirkt, wobei durch Längenexpansion des ersten Druckelements (30) die Heckklappe (10) und der hintere Schwingenabschnitt (21) aufwärts schwenkbar sind.

7. Rundballenpresse nach Anspruch 6, **dadurch gekennzeichnet, dass** der hintere Schwingenabschnitt (21) eine drehbare hintere Schwingen-Führungsrolle (23) aufweist, welche das Presselement (15) innenseitig führt.

8. Rundballenpresse nach einem der vorangehenden Ansprüche, **dadurch gekennzeichnet, dass** die Heckklappe (10) wenigstens eine drehbare Klappen-Führungsrolle (11) aufweist, welche das Presselement (15) innenseitig führt.

9. Rundballenpresse nach einem der vorangehenden Ansprüche, **dadurch gekennzeichnet, dass** die Spannschwinge (20) einen entlang der Längsachse (X) vor der Schwingenachse (B) angeordneten vorderen Schwingenabschnitt (22) mit einem Auswerferelement (25) aufweist, das dazu eingerichtet ist, beim Schwenken der Spannschwinge (20) wenigstens indirekt auf den Erntegutballen (50) einzuwirken, um diesen auszuwerfen.

10. Rundballenpresse nach Anspruch 9, **dadurch gekennzeichnet, dass** das Auswerferelement (25) dazu eingerichtet ist, zum Auswerfen des Erntegutballens (50) auf das Presselement (15) einzuwirken.

11. Rundballenpresse nach einem der Ansprüche 9 oder 10, **dadurch gekennzeichnet, dass** das Auswerferelement (25) als drehbare Auswerferrolle ausgebildet ist.

12. Rundballenpresse nach einem der Ansprüche 9 bis 11, **dadurch gekennzeichnet, dass** der vordere Schwingenabschnitt (22) wenigstens eine drehbare vordere Schwingen-Führungsrolle (24) aufweist, welche das Presselement (15) außenseitig führt.

13. Verfahren zum Betreiben einer Rundballenpresse (1) mit einem Rahmen (2), einer demgegenüber um eine Klappenachse (A) schwenkbaren Heckklappe (10), einem endlosen, umlaufend antreibbaren Presselement (15), durch welches innerhalb des Rahmens (2) eine Presskammer (16) zur Formung eines Erntegutballens (50) wenigstens teilweise definierbar ist, einer gegenüber dem Rahmen (2) um eine Schwingenachse (B) schwenkbare Spannschwinge (20), die wenigstens eine drehbare Schwingen-Führungsrolle (23, 24) aufweist, welche das Presselement (15) führt, einem zwischen dem Rahmen (2) und der Heckklappe (10) wirkenden ersten Druckelement (30) und einem auf die Spannschwinge (20) wirkenden zweiten Druckelement (31, 32),
wobei das zweite Druckelement (31, 32) zwischen der Heckklappe (10) und der Spannschwinge (20) wirkt und wenigstens ein Druckelement (30, 31, 32) als Linearaktor ausgebildet ist, wobei das Verfahren die folgenden Schritte umfasst:
- Schwenken der Heckklappe (10) und der Spannschwinge (20) durch Längenexpansion des ersten Druckelements (30), wobei die Heckklappe (10) aufwärts geschwenkt wird;
- Auswerfen des Erntegutballens (50);
**dadurch gekennzeichnet, dass** das Verfahren den zusätzlichen folgenden Schritt umfasst:
- Abwärtsschwenken der Heckklappe (10) durch Längenexpansion des zweiten Druckelements (31, 32).

## Claims

1. A round baler (1) with a frame (2), a tailgate (10) which can be pivoted relative to the frame about a gate axis (A), an endless, rotatingly drivable pressing element (15), by means of which a pressing chamber (16) for forming a crop bale (50) can be at least partially defined within the frame (2), a tensioning rocker arm (20) which can be pivoted relative to the frame (2) about a rocker arm axis (B), which has at least one rotatable arm guide roller (23, 24) which guides the pressing element (15), a first pressure element (30) acting between the frame (2) and the tailgate (10) and a second pressure element (31, 32) acting on the tensioning rocker arm (20),
wherein the second pressure element (31, 32) acts between the tailgate (10) and the tensioning rocker arm (20) and at least one pressure element (30, 31, 32) is designed as a linear actuator, wherein the tailgate (10) and the clamping arm (20) can be pivoted by expanding the length of the first pressure element (30), in order to enable the crop bale (50) to be ejected by pivoting the tailgate (10) upwards,
**characterized in that**
by expanding the length of the second pressure element (31, 32), the tailgate (10) can be pivoted downwards.

2. The round baler according to claim 1, **characterized in that** at least one pressure element (30, 31, 32) is designed as a single-acting cylinder.

3. The round baler according to one of the preceding claims,
**characterized in that** a pressure element (30, 31, 32) is designed as a compression spring.

4. The round baler according to one of the preceding claims,
**characterized in that** the first pressure element (30) is designed as a single-acting cylinder.

5. The round baler according to claim 1 or 2, **characterized in that** both pressure elements (30, 31, 32) are designed as single-acting cylinders.

6. The round baler according to one of the preceding claims,
**characterized in that** the tensioning rocker arm has a rear rocker arm section (21) arranged behind the rocker arm axis (B) with respect to a longitudinal axis (X) of the round baler (1), wherein the second pressure element (31, 32) acts between the tailgate (10) and the rear rocker arm section (21), wherein the tailgate (10) and the rear rocker arm section (21) can be pivoted upwards by expanding the length of the first pressure element (30).

7. The round baler according to claim 6, **characterized in that** the rear rocker arm section (21) has a rotatable rear rocker arm guide roller (23) which guides the pressing element (15) on the inside.

8. The round baler according to one of the preceding claims,
**characterized in that** the tailgate (10) has at least one rotatable gate guide roller (11) which guides the pressing element (15) on the inside.

9. The round baler according to one of the preceding claims,
**characterized in that** the tensioning rocker arm (20) has a front rocker arm section (22) arranged along the longitudinal axis (X) in front of the rocker arm axis (B) with an ejector element (25), which is designed to act at least indirectly on the crop bale (50) when the tensioning rocker arm (20) is pivoted, in order to eject it.

10. The round baler according to claim 9, **characterized in that** the ejector element (25) is designed to act on the pressing element (15) for ejecting the crop bale (50).

11. The round baler according to one of claims 9 or 10, **characterized in that** the ejector element (25) is designed as a rotatable ejector roller.

12. The round baler according to one of claims 9 to 11, **characterized in that** the front rocker arm section (22) has at least one rotatable front rocker arm guide roller (24), which guides the pressing element (15) on the outside.

13. A method for operating a round baler (1) with a frame (2), a tailgate (10) which can be pivoted relative to the frame about a gate axis (A), an endless, rotatingly drivable pressing element (15) by means of which a pressing chamber (16) for forming a crop bale (50) can be at least partially defined within the frame (2), a tensioning rocker arm (20) which can be pivoted relative to the frame (2) about a rocker arm axis (B), which has at least one rotatable arm guide roller (23, 24) which guides the pressing element (15), a first pressure element (30) acting between the frame (2) and the tailgate (10) and a second pressure element (31, 32) acting on the tensioning rocker arm (20), wherein the second pressure element (31, 32) acts between the tailgate (10) and the tensioning rocker arm (20), and at least one pressure element (30, 31, 32) is designed as a linear actuator, wherein the method comprises the following steps:
- pivoting the tailgate (10) and the tensioning rocker arm (20) by expanding the length of the first pressure element (30), wherein the tailgate (10) is pivoted upwards;
- ejecting the crop bale (50);
**characterized in that** the method comprises the additional following step:
- pivoting the tailgate (10) downwards by expanding the length of the second pressure element (31, 32).

## Revendications

1. Presse à balles rondes (1) comprenant un châssis (2), un volet arrière (10), en face, basculant autour d'un axe de volet (A), un élément de presse (15), sans fin, entrainé en circulation et qui définit au moins partiellement à l'intérieur du châssis (2) une chambre de presse (16) pour former une balle de produits récoltés (50), un bras tendeur (20) basculant par rapport au châssis (2) autour d'un axe de basculement (B), et qui porte au moins un galet de guidage de bras (23, 24) rotatif qui guide l'élément de presse (15), un premier élément de poussée (30) agissant entre le châssis (2) et le volet arrière (10) et un second élément de poussée (31, 32) agissant sur le bras tendeur (20),
dans laquelle
le second élément de poussée (31, 32) agissant entre le volet arrière (10) et le bras tendeur (20) et au moins un élément de poussée (30, 31, 32) est réalisé comme actionneur linéaire,
* l'expansion longitudinale du premier élément de poussée (30) basculant le volet arrière (10) et le bras tendeur (20) pour permettre le basculement vers le haut du volet arrière (10) pour éjecter la balle de produits (50),
presse **caractérisée en ce que**
l'expansion longitudinale du second élément de poussée (31, 32) fait basculer vers le bas le volet arrière (10).

2. Presse à balles rondes selon la revendication 1,
**caractérisée en ce que**
au moins un élément de poussée (30, 31, 32) est sous la forme d'un vérin à simple effet.

3. Presse à balles rondes selon l'une des revendications précédentes, **caractérisée en ce que**
un élément de poussée (30, 31, 32) est sous la forme d'un ressort de compression.

4. Presse à balles rondes selon l'une des revendications précédentes, **caractérisée en ce que**
le premier élément de poussée (30) est un vérin à simple effet.

5. Presse à balles rondes selon la revendication 1 ou 2,
**caractérisée en ce que**
les deux éléments de poussée (30, 31, 32) sont des vérins à simple effet.

6. Presse à balles rondes selon l'une des revendications précédentes, **caractérisée en ce que**
le bras tendeur a un segment arrière de bras (21) situé derrière l'axe de basculement (B) par rapport à l'axe longitudinal (X) de la presse à balles rondes (1),
* le second élément de poussée (31, 32) agissant entre le volet arrière (10) et le segment arrière de bras (21),
* l'expansion longitudinale du premier élément de pression (30) faisant basculer vers le bas le volet arrière (10) et le segment arrière de bras (21).

7. Presse à balles rondes selon la revendication 6,
**caractérisée en ce que**
le segment de bras arrière (21) porte un galet de guidage de bras arrière (23), rotatif qui guide l'élément de presse (15) sur un côté.

8. Presse à balles rondes selon l'une des revendications précédentes, **caractérisée en ce que**
le volet arrière (10) a au moins un galet rotatif (11) de guidage de volet qui guide l'élément de presse (15) sur un côté.

9. Presse à balles rondes selon l'une des revendications précédentes, **caractérisée en ce que**
le bras tendeur (20) a un segment avant (22) de bras tendeur avant devant l'axe de basculement (B) selon l'axe longitudinal (X) avec un élément éjecteur (25) pour qu'au basculement du bras tendeur (20), agir au moins indirectement sur la balle de produits (50) pour l'éjecter.

10. Presse à balles rondes selon la revendication 9,
**caractérisée en ce que**
l'élément éjecteur (25) agit sur l'élément de presse (15) pour éjecter la balle de produits (50).

11. Presse à balles rondes selon l'une des revendications 9 ou 10, **caractérisée en ce que**
l'élément éjecteur (25) est sous la forme d'un galet éjecteur rotatif.

12. Presse à balles rondes selon l'une des revendications 9 à 11 **caractérisée en ce que**
le segment avant de bras (22) a au moins un galet de guidage de bras avant (24) rotatif qui guide l'élément de presse (15) sur le côté extérieur.

13. Procédé de fonctionnement d'une presse à balles rondes (1) comportant un châssis (2), un volet arrière (10) basculant par rapport à celui-ci autour d'un axe de basculement (A), un élément de presse (15), sans fin, entrainé en circulation et qui définit au moins partiellement une chambre de presse (16) à l'intérieur du châssis (2) pour former une balle de produits récoltés (50), un bras tendeur (20) basculant par rapport au châssis (2) autour d'un axe de basculement (B) et qui a au moins un galet de guidage de bras rotatif (23, 24) qui guide l'élément de presse (15), un premier élément de poussée (30) agissant entre le châssis (2) et le volet arrière (10) et un second élément de poussée (31, 32) agissant sur le bras tendeur (20),
procédé selon lequel
le second élément de poussée (31, 32) agit entre le volet arrière (10) et le bras tendeur (20) et au moins un élément de poussée (30, 31, 32) est sous la forme d'un actionneur linéaire,
* le procédé comprenant les étapes suivantes consistant à :
- basculer le volet arrière (10) et le bras tendeur (20) par l'expansion longitudinale du premier élément de poussée (30),
* le volet arrière (10) basculant vers le haut,
- éjecter la balle de produit (50),
procédé **caractérisé en ce qu'**il comprend en plus les étapes suivantes consistant :
- basculer vers le bas le volet arrière (10) par l'expansion longitudinale du second élément de poussée (31, 32).
